# EUROPEAN PATENT APPLICATION

(11) **EP 3 968 614 A1**
(43) Date of publication of application: **16.03.2022**
(21) Application number: 22150576.1
(22) Date of filing: 07.01.2022
(51) Int. Cl.: H04L 67/565, H04L 69/08, H04L 67/12, H04L 67/5651, H04L 67/564

(54) **MESSAGE PROCESSING METHOD AND DEVICE, ELECTRONIC EQUIPMENT, STORAGE MEDIUM AND PROGRAM PRODUCT**

(30) Priority: 01.06.2021 CN 202110608904
(71) Applicant: BEIJING BAIDU NETCOM SCIENCE TECHNOLOGY CO., LTD., No.10 Shangdi 10th Street Haidian District Beijing 100085 (CN)
(72) Inventor: LI, Zhe, Beijing, 100085 (CN)
(74) Representative: Bergadano, Mirko

(57) **Abstract**

A message processing method executed by a computer, which includes: acquiring a first alarm message based on an OPC-AE protocol, wherein the first alarm message includes first alarm data of a plurality pieces of equipment; parsing the first alarm message to obtain the first alarm data of the plurality pieces of equipment; converting the first alarm data of the plurality pieces of equipment into second alarm data in a JSON format to obtain the second alarm data of the plurality pieces of equipment; and generating a second alarm message based on the second alarm data of the plurality pieces of equipment and sending the second alarm message to target equipment based on a Kafka protocol.

## Description

### TECHNICAL FIELD

The present disclosure relates to the field of computer technologies, and more particularly relates to the field of Internet of Things technologies.

### BACKGROUND

In some scenarios (e.g.: in an Internet of Things scenario), alarms for equipment are mainly sent based on an Object Linking and Embedding (OLE) for Process Control (OPC)-Alarm and Events (AE) protocol.

### SUMMARY

The present disclosure provides a message processing method and device, a piece of electronic equipment, a storage medium, and a program product.

According to an aspect of the present disclosure, a message processing method is provided, which includes: acquiring a first alarm message based on an Object Linking and Embedding (OLE)- alarm and events (AE) protocol, wherein the first alarm message includes first alarm data of a plurality pieces of equipment; parsing the first alarm message to obtain the first alarm data of the plurality pieces of equipment; converting the first alarm data of the plurality pieces of equipment into second alarm data in a JSON format to obtain second alarm data of the plurality pieces of equipment; and generating a second alarm message based on the second alarm data of the plurality pieces of equipment and sending the second alarm message to target equipment based on a Kafka protocol.

According to another aspect of the present disclosure, a message processing device is provided, which includes: an acquisition module, used for acquiring a first alarm message based on process control object linking and embedding an OPC-alarm and event (AE) protocol, wherein the first alarm message includes first alarm data of the plurality pieces of equipment; a parsing module, used for parsing the first alarm message to obtain first alarm data of the plurality pieces of equipment; a conversion module, used for converting first alarm data of the plurality pieces of equipment into second alarm data in a JSON format to obtain the second alarm data of the plurality pieces of equipment; and a sending module, used for generating a second alarm message based on the second alarm data of the plurality pieces of equipment and sending the second alarm message to the target equipment based on the Kafka protocol. According to another aspect of the present disclosure, a piece of electronic equipment is provided, which includes: at least one processor; and a memory communicatively coupled to the at least one processor; wherein the memory stores instructions executable by the at least one processor, the instructions are executed by the at least one processor, so that the at least one processor can perform the message processing method provided by the present disclosure.

According to another aspect of the present disclosure, a non-transitory computer-readable storage medium storing computer instructions is provided, wherein the computer instructions are used for the computer to perform the message processing method provided by the present disclosure.

According to another aspect of the present disclosure, a computer program product is provided, which includes a computer program, when the computer program is executed by a processor, the message processing method provided by the present disclosure is implemented.

In the present disclosure, the alarm data in the first alarm message acquired by using the OPC-AE protocol is sent to the pieces of target equipment through the Kafka protocol, so that the efficient transmission characteristic of the Kafka protocol is utilized, thereby improving the alarm efficiency.

It should be understood that the description herein is not intended to identify key or critical features of the embodiments of the disclosure or to limit the scope of the disclosure. Other features of the present disclosure will become readily apparent from the following description.

### BRIEF DESCRIPTION OF THE DRAWINGS

The drawings are included to provide a better understanding of the present scheme and are not to be construed as limiting the disclosure, wherein:
FIG. 1 is a flow chart of a message processing method provided by an embodiment of the present disclosure;
FIG. 2 is a schematic diagram of message processing procedure provided by an embodiment of the present disclosure;
FIG. 3 is a schematic diagram of message sending procedure provided by an embodiment of the present disclosure;
FIG. 4 is a schematic diagram of another message sending procedure provided by an embodiment of the present disclosure;
FIG. 5 is a flow chart of another message processing method provided by an embodiment of the present disclosure;
FIG. 6 is a structural diagram of a message processing device provided by an embodiment of the present disclosure;
FIG. 7 is a structural diagram of another message processing device provided by an embodiment of the present disclosure; and
FIG. 8 is a block diagram of a piece of electronic equipment for implementing a message processing method according to an embodiment of the present disclosure.

### DETAILED DESCRIPTION

The following description of the exemplary embodiments of the present disclosure, taken in conjunction with the accompanying drawings, includes various details of the embodiments of the disclosure to facilitate understanding and is to be construed as exemplary only. Accordingly, those ordinary skilled in the art will recognize that various changes and modifications may be made to the embodiments described herein. Also, descriptions of general functions and constructions are omitted from the following description for clarity and conciseness.

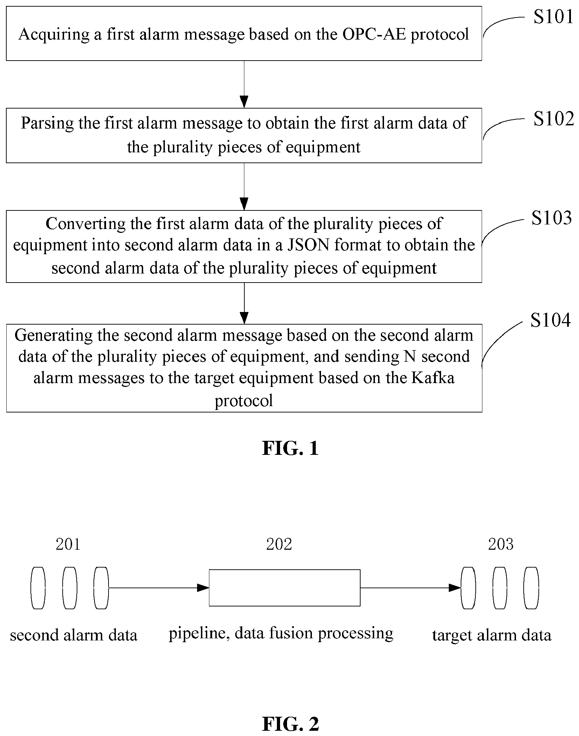

With reference to FIG. 1, FIG. 1 is a flow chart of the message processing method executed by a computer provided by the present disclosure, as shown in FIG. 1, the following steps are included:
S101, based on the OPC-AE protocol, a first alarm message is acquired, wherein the first alarm message includes the first alarm data of the plurality pieces of equipment.

The above-mentioned specific embodiment of acquiring the first alarm message based on the OPC-AE protocol may be, for example, the above-mentioned first alarm message is acquired from an OPC-AE server based on the OPC-AE protocol. Of course, the disclosed embodiments are not limited. The above-mentioned specific embodiment of acquiring the first alarm message based on the OPC-AE protocol may be, for example,

the above-mentioned first alarm message is acquired from a certain sever with any type which satisfies other protocol based on other available protocol(s). For example, before the S101, an alarm message is subscribed from an OPC-AE server, so that the first alarm message is sent when the OPC-AE server receives an equipment alarm.

The above-mentioned first alarm message is, for example, an alarm message in an OPC-AE protocol format. The above-mentioned first alarm message may include the plurality of alarm messages of the same equipment, and each alarm message includes one or more pieces of first alarm data of one piece of equipment. The above-mentioned plurality pieces of equipment (namely, the plurality pieces of equipment to be monitored) are, for example, the plurality pieces of equipment to be monitored having OPC-AE protocol connection established with the OPC-AE server. For example, Internet of Things equipment in an intelligent building or Internet of Things (IoT) equipment in an industrial site. Additionally, the first alarm message may, for example, include one or more alarm messages.

In the present disclosure, the first alarm data may be alarm data reported to the OPC-AE server through the OPC-AE protocol when the equipment alarms. These alarm data includes, for example, one or more of the following: data for equipment safety restrictions, data for event detection, data for fault identification, data for equipment auditing, data for abnormal situation monitoring, and so forth. Of course, the disclosed embodiments are not limited and can include data for other possible uses according to actual requirements.

S102, the first alarm message is parsed to obtain the first alarm data of the plurality pieces of equipment.

S103, the first alarm data of the plurality pieces of equipment is converted into second alarm data in a JSON format to obtain the second alarm data of the plurality pieces of equipment.

The step can include that: the first alarm data of the plurality pieces of equipment can be converted into JSON instances and each JSON instance corresponds to one or more pieces of second alarm data. Here, the JSON instance is only one possible implementation. In addition, the first alarm data of the plurality pieces of equipment may be converted into other types of examples according to the actual requirements. S104, based on the second alarm data of the plurality pieces of equipment, the second alarm message is generated, and the second alarm message is sent to the target equipment based on the Kafka protocol.

In the present disclosure, the second alarm message is an alarm message in a Kafka protocol format. Here, the Kafka protocol format is only one possible implementation. In addition, the second alarm message can also be the alarm message in another protocol format according to actual requirements.

The step may be generating the second alarm message directly based on the second alarm data of the plurality pieces of equipment. Optionally, the above-mentioned step may be that the second alarm data of the above-mentioned plurality pieces of equipment is firstly processed such as fusion and filtering, and then the second alarm message is generated based on the processed alarm data. Further, the second alarm message may, for example, include one or more alarm messages.

It should be noted that in the present disclosure, the target equipment may include one or more pieces of target equipment. Specifically, the target equipment includes, for example, one or more pieces of equipment of an Internet of Things platform, third-party equipment, an alarm platform, etc.

In the present disclosure, it can be achieved through the above-mentioned steps that the alarm data in the first alarm message acquired by the OPC-AE protocol is sent to the target equipment through the Kafka protocol, so that the efficient transmission characteristic of such the Kafka protocol is utilized, thereby improving alarm efficiency. Specifically, the above-mentioned method provided by the embodiments of the present disclosure can be executed by various computers (OPC-AE clients), and can also be executed by pieces of electronic equipment such as computers, cell phones, tablets, servers, etc. In addition, the above-mentioned method can be executed by specific equipment, or firmware and/or software corresponding to the above-mentioned method can be added to existing equipment, so that the technical solution provided by the present disclosure can be implemented and deployed as a hardware gateway or a software gateway, which is very flexible and convenient.

As an optional embodiment, the first alarm message includes, for example, M alarm messages, wherein M is a positive integer greater than one(1).

The second alarm message includes, for example, N second alarm messages, wherein N is a positive integer less than M.

The M alarm messages may correspond to M pieces of first alarm data, i.e., each alarm message includes one piece of first alarm data. Optionally, the M alarm messages may correspond to the first alarm data of the M pieces of equipment, i. e. each alarm message includes the first alarm data of one piece of equipment. After receiving the M alarm messages, the M alarm messages are parsed to obtain the first alarm data of the plurality pieces of equipment.

The N second alarm messages may be the second alarm messages generated directly based on the second alarm data of the plurality pieces of equipment, wherein the alarm message including the plurality pieces of second alarm data exists in the N second alarm messages. That is, the plurality pieces of second alarm data can be transmitted through the same message, thereby improving alarm efficiency and also saving transmission resources. Optionally, the above-mentioned step may be that the second alarm data of the above-mentioned plurality pieces of equipment is firstly processed such as fusion and filtering, and then N second alarm messages are generated based on the processed alarm data.

In some scenarios, the above-mentioned N may be, for example, one(1), which means that the alarm data of M OPC-AE protocol alarm messages are sent through 1 Kafka protocol alarm message. Optionally, in some scenarios, N may be the number of the pieces of target equipment, i.e., one alarm message is sent to each piece of target equipment.

In this embodiment, since the alarm data of the acquired M first alarm messages are passed through the N second alarm messages (where M is greater than N), it can be realized that the number of alarm messages can be reduced when transmitted through the Kafka protocol, thereby further improving the alarm efficiency.

As an optional embodiment, the step that the second alarm message is generated based on second alarm data of the plurality pieces of equipment includes: performing data fusion processing on the second alarm data of the plurality pieces of equipment to obtain target alarm data, and generating the second alarm message, wherein the second alarm message comprises the target alarm data.

The above-mentioned data fusion processing performed on the second alarm data of the plurality pieces of equipment may be, for example, one or more steps of filtering, repairing, fusing and the like processing/procedures performed on the second alarm data of the plurality pieces of equipment. Of course, it will be understood by those skilled in the art that the second alarm data for the plurality pieces of equipment described above may be further processed according to actual requirements and will not be further described herein.

In some embodiments, a Pipeline for data fusion processing of alarm data may be pre-configured. For example, as shown in FIG. 2, the second alarm data 201 of the plurality pieces of equipment is input into a pre-configured pipeline 202, the second alarm data of the plurality pieces of equipment is subjected to, for example, data fusion processing in the pipeline, and the processed target alarm data 203 is outputted. In this way, data processing efficiency can be improved due to the data fusion processing of the alarm data through a special pipeline.

In the above-mentioned embodiments, by performing the data fusion processing on the second alarm data of the plurality pieces of equipment, more accurate and reduced target alarm data can be obtained, so as to further improve the alarm efficiency and the alarm accuracy.

Optionally, the step that the data fusion processing is performed on the second alarm data of the plurality pieces of equipment to obtain the target alarm data includes at least one of the following:
performing target operation on a first part of data in the second alarm data of the plurality pieces of equipment to obtain virtual equipment alarm data;
filtering the second alarm data of the plurality pieces of equipment to obtain filtered alarm data;
performing repair processing on abnormal data in the second alarm data of the plurality pieces of equipment to obtain repaired alarm data; and
editing a second part of data in the second alarm data of the plurality pieces of equipment to obtain edited alarm data.

Specifically the target alarm data comprises at least one of the following: the virtual equipment alarm data, the filtered alarm data, the repaired alarm data, and the edited alarm data.

The first part of data may, for example, be the alarm data of the pieces of equipment with the same type. For example, the alarm data of the pieces of equipment with the same type at different floors in a same building. Of course, the first part of data may also be the alarm data for the different types of devices, which is not limited in the embodiments of the present disclosure.

In addition, the target operation may be, for example, an addition or an averaging operation of alarm values in the first part of alarm data to obtain an alarm value of a virtual device. For example, the alarm values of the electricity meters of different floors in the same building are added to obtain the alarm values of the total electricity meters of the building.

The above-mentioned virtual device alarm data refers to devices which do not exist in practice. For example, a device that is not present in the alarm message of the OPC-AE protocol. Here, a virtual device is generated through the above-mentioned target operation, and the alarm data of the virtual device is reported to the target equipment. In this embodiment, the alarm effect can be further improved by generating the virtual device alarm data.

Furthermore, in some embodiments, after the above-mentioned virtual device alarm data is generated, the above-mentioned first part of alarm data may be deleted, namely, only virtual device alarm data is reported, so as to feed back alarms of the plurality pieces of equipment corresponding to the above-mentioned first part of alarm data through one piece of virtual device alarm data, so as to further improve the alarm efficiency. In addition, device information of a corresponding virtual device can also be created for the above-mentioned virtual device alarm data. Further, the device information and the virtual device alarm data are sent to the target equipment, e. g. through the same second alarm message.

The above-mentioned filtering processing on the second alarm data of the plurality pieces of equipment may be pre-configured with a plurality of filtering rules, for example, a filtering rule for filtering out alarm data before a certain time. Optionally, the rules for filtering out frequent alarms. Among other things, these frequent alarms may be alarms that have been acknowledged by a worker but have not been processed. Optionally, these frequent alarms may also be rules for filtering out false alarms, etc. In this embodiment, by filtering the second alarm data of the plurality pieces of equipment, it is possible to improve the accuracy of the alarm and save transmission resources.

The above-mentioned repair processing on abnormal data in the second alarm data of the plurality pieces of equipment may be based on at least one of historical alarm data and historical normal operation data of the device corresponding to the abnormal data. The device corresponding to the abnormal data includes the device to which the abnormal data belongs, and may also include an associated device of the device to which the abnormal data belongs. For example, if the plurality pieces of equipment of the same type in the same building alarm, where the alarm data for one device is abnormal, the abnormal data for that device may be repaired based on the alarm data for other devices of the building. As another example, if only one of a plurality pieces of equipment of the same type in the same building alarms, and the alarm data of the device is abnormal, the abnormal data of the device may be repaired based on the other devices of the building and historical normal operating data of the device. In addition, if the above-mentioned repaired alarm data complies with the preset normal operation data of the device, indication information about the normal operation of the device is added to the above-mentioned recovery alarm data, so as to indicate a false alarm to the target equipment.

In this embodiment, the alarm accuracy can be further improved by repairing the alarm data as described above.

The editing of the second part of data in the second alarm data of the plurality pieces of equipment may be modifying the description of the second part of data. For example, the alert level, alarm content, etc., if the second part of data is modified. Optionally, the unit of the second part of data can be modified, for example, the unit of the alarm values in the second part of data is modified into the unit which can more easily present alarm contents, so that the user can confirm the alarm contents more simply, clearly and quickly. Optionally, the alarm content may be added to the second alarm data. For example, the alarm contents that cannot be supported or uploaded in the OPC-AE protocol are added, and these added contents may be derived based on the second alarm data.

In this embodiment, the alarm effect can be further improved by editing the alarm data as described above.

As an optional embodiment, the step that the second alarm message is generated based on the second alarm data of the plurality pieces of equipment and sending the second alarm message to the target equipment based on a Kafka protocol includes at least one of the following:
acquiring the alarm data satisfying the first preset condition from the second alarm data of the plurality pieces of equipment, generating the second alarm message corresponding to the first preset condition, and sending the second alarm message corresponding to the first preset condition to the first piece of target equipment, wherein
the second alarm message corresponding to the first preset condition, for example, includes one or more of the following items: satisfying the alarm data information of the first preset condition, satisfying the preset Kafka address information of the first piece of target equipment, and satisfying the preset Kafka topic information of the first piece of target equipment; and
acquiring the alarm data satisfying the second pre-set condition from the second alarm data of the plurality pieces of equipment, generating the second alarm message corresponding to the second pre-set condition, and sending the second alarm message corresponding to the second pre-set condition to the second piece of target equipment, wherein the second alarm message corresponding to the second pre-set condition, for example, includes one or more of the following items: satisfying the alarm data information of the second preset condition, satisfying the preset Kafka address information of the second piece of target equipment, and satisfying the preset Kafka topic information about the second piece of target equipment.

The above-mentioned first preset condition and second preset condition may, for example, be preset according to scene requirements. For example, the first preset condition may be a pre-set device type, in particularly is that some Internet of Things devices are pre-selected. In this way, the alarm data of these Internet of Things devices can be sent to the first piece of target equipment (for example, the Internet of Things platform) corresponding to the first preset condition through the above-mentioned first preset condition. Optionally, the first preset condition may be the preset alarm type. Thus, the alarm data of these alarm types can be transmitted to the first piece of target equipment corresponding to the first preset condition through the above-mentioned first preset condition. The above-mentioned second preset condition may be the preset alarm value, so that the alarm data exceeding these alarm values can be sent to the second piece of target equipment (for example, sending to the corresponding alarm platform) corresponding to the second preset condition through the above-mentioned second preset condition. Optionally, the above-mentioned second preset condition may be preset alarm time, alarm content, etc., so that the alarm data corresponding to these alarm time and the alarm content can be sent to the second piece of target equipment corresponding to the second preset condition (for example, sending to the corresponding third party equipment) through the second preset condition.

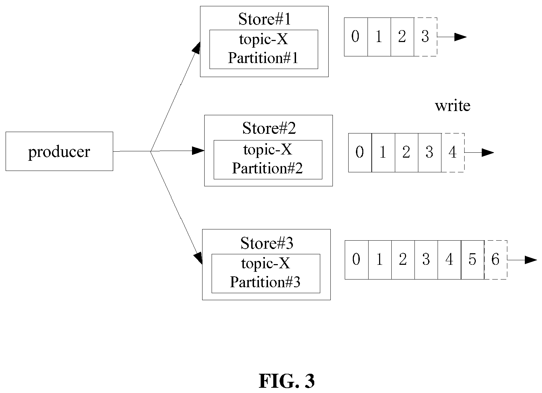

In this embodiment, after alarm data of the above-mentioned first preset condition is determined, preset Kafka address information and preset Kafka Topic information about the first piece of target equipment may be added to the alarm data, and then a second alarm message corresponding to the above-mentioned first preset condition is obtained based on the information. The preset Kafka address information may include Broker configuration information, and the same Kafka topic may correspond to plurality of storages. For example, as shown in FIG. 3, the producer of the Kafka protocol message sends the alarm messages corresponding to topic-X to store #1, store #2, and store #3, respectively. Specifically, the store #1, store #2, and store #3 are used to store the alarm messages for three(3) partitions of the topic-X, respectively. The alarm data in these alarm messages may be stored in the format of a queue. For example, FIG. 3 shows three groups of queues for the store #1, store #2, and store #3, respectively. The second alarm message corresponding to the above-mentioned second preset condition can refer to the second alarm message corresponding to the above-mentioned first preset condition, and the description thereof will not be repeated here. In addition, in some embodiments, a third preset condition and a fourth preset condition may be preset, and different preset conditions correspond to different pieces of target equipment. It should be noted that in some application scenarios of the present disclosure, there may be, for example, the alarm message that simultaneously satisfies the plurality of preset conditions.

In this embodiment, it may be achieved that the second alarm message is sent to the corresponding target equipment, so that the accuracy of the alarm may be further improved.

As an optional embodiment, the plurality pieces of equipment includes the plurality pieces of equipment of different types, wherein the first alarm data of the plurality pieces of equipment of different types includes at least one of: an equipment identification, an alarm type, alarm times, alarm confirmation indication information, and time information.

The plurality pieces of equipment of different types above-mentioned may include, but are not limited to, at least one of the following: lighting equipment, power storage equipment, household equipment, vehicles, unmanned aerial vehicles, monitoring equipment, communication equipment, power equipment, and robots.

The alarm confirmation indication information may include an indication of whether the alarm is confirmed and may also include information about the user or device that confirmed the alarm. For example, wherein the confirmation means that related user or equipment concerned knows the alarm.

In this embodiment, integration of alarm data for the plurality of different types of devices into the second alarm message may be implemented to further improve the alarm efficiency.

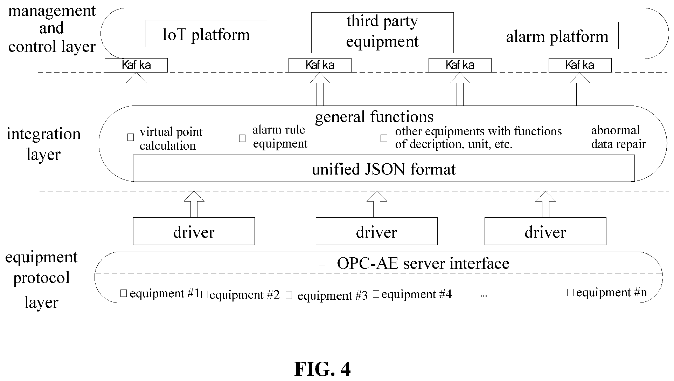

For example, as shown in FIG. 4, the first alarm message of an OPC-AE protocol of the device, such as a lighting device, a power storage device, a home device, a vehicle, an unmanned aerial vehicle, a monitoring device, a communication device, a power device, a robot, etc. may be acquired at the equipment protocol layer through an OPC-AE interface. These devices are represented in FIG. 4 by equipment #1, equipment #2, equipment #3, equipment #4...... and equipment #n. Here, equipment #1, equipment #2, equipment #3, equipment #4, ....... equipment #n shown in FIG. 4 correspond, for example, to the plurality pieces of equipment mentioned in the above-described embodiment described with reference to FIG. 1. Then, the first alarm data in these first alarm messages is parsed and converted into the second alarm data in the JSON format, for example, at the integration layer, and these pieces of second alarm data are subjected to the data fusion processing, for example, virtual point calculation, alarm rule filtering, description, unit setting, etc. other item setting and abnormal data repair, etc. Here, the virtual point calculation can refer to the virtual device alarm data described in the above embodiment, and will not be described in detail herein. Finally, the second alarm data is sent to the management and control layer through the Kafka protocol, for example, the second alarm data is sent to one or more of the Internet of Things platform, the third-party device, and the alarm platform. Here, the Internet of Things platform, the third-party device, and the alarm platform shown in FIG. 4 correspond, for example, to the target equipment mentioned in the above-described embodiment described with reference to FIG. 1. In addition, the integration of the functions performed by the equipment protocol layer, the integration layer, and the management and control layer described herein with reference to FIG. 4 corresponds, for example, to the computer mentioned in the embodiment described above with reference to FIG. 1.

Specifically, the above-mentioned method provided by the embodiments of the present disclosure can be executed by various computers (OPC-AE clients), and can also be executed by pieces of electronic equipment such as computers, cell phones, tablets, servers, etc. In addition, the above-mentioned method can be executed by a specific device, or firmware and/or software corresponding to the above-mentioned method can be added to an existing device, so that the technical solution provided by the present disclosure can be implemented and deployed as a hardware gateway or a software gateway, which is very flexible and convenient.

In the present disclosure, it can be realized that the alarm data in the first alarm message acquired by using the OPC-AE protocol is sent to the target equipment through the Kafka protocol, so that the efficient transmission characteristic of the Kafka protocol is utilized, thereby improving the alarm efficiency. In addition, since the alarm data of the OPC-AE protocol is sent through the Kafka protocol, the integration efficiency of the OPC-AE protocol is effectively improved, the data acquisition cost is reduced, the exception repair and virtual point configuration can also be supported, and the functions such as sending a short message or mail to realize an alarm can also be supported.

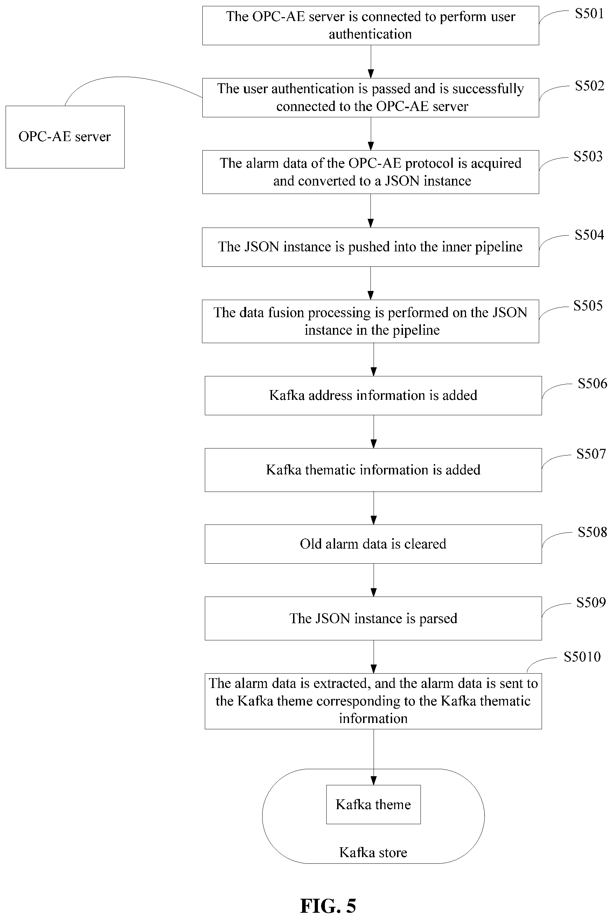

A message processing method provided by an embodiment of the present disclosure is illustrated by taking FIG. 5 as an example. As shown in FIG. 5, the message processing method includes, for example, the following steps:
Step S501, the OPC-AE server is connected to perform user authentication;
Step S502, the user authentication is passed and is successfully connected to the OPC-AE server;
Step S503, the alarm data of the OPC-AE protocol is acquired and converted to a JSON instance;

Here, the step S503 can be parsing the alarm message of the OPC-AE protocol, and converting the parsed first alarm data into alarm data in the JSON format, namely, obtaining the above-mentioned JSON instance;
Step S504, the JSON instance is pushed into the inner pipeline;
Step S505, the data fusion processing is performed on the JSON instance in the pipeline;
Step S506, Kafka address information is added;
Step S507, Kafka topic information is added;
Step S508, old alarm data is cleared, for example, the alarm data before three(3) hours is cleared;
Step S509, the JSON instance is parsed;
Step S5010, the alarm data is extracted, and the alarm data is sent to the Kafka topic corresponding to the Kafka topic information;

The embodiment shown in FIG. 5 can transmit the alarm data of the OPC-AE protocol through the Kafka protocol, so that the alarm efficiency can be improved.

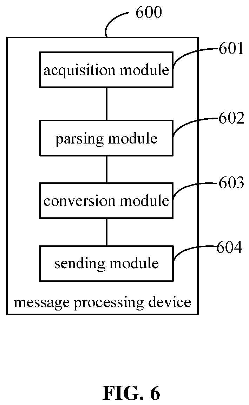

With reference to FIG. 6, FIG. 6 is the message processing device provided by the present disclosure, and as shown in FIG. 6, the message processing device 600 for example includes:
an acquisition module 601, used for acquiring the first alarm message based on the process control object linking and embedding the OPC-AE alarm and event (AE) protocol, wherein the first alarm message includes the first alarm data of the plurality pieces of equipment;
a parsing module 602, used for parsing the first alarm message to obtain the first alarm data of the plurality pieces of equipment;
a conversion module 603, used for converting the first alarm data of the plurality pieces of equipment into second alarm data in the JSON format to obtain the second alarm data of the plurality pieces of equipment; and
a sending module 604, used for generating the second alarm message based on the second alarm data of the plurality pieces of equipment, and sending the second alarm message to the target equipment based on the Kafka protocol.
Optionally, the first alarm message includes the M alarm messages, wherein M is a positive integer greater than one(1);

The second alarm message includes N second alarm messages, wherein N is a positive integer less than M.

Optionally, the sending module 604 is used for performing the data fusion processing on the second alarm data of the plurality pieces of equipment to obtain the target alarm data, generating the second alarm message, and sending the second alarm message to the pieces of target equipment based on the Kafka protocol, wherein the second alarm message includes the target alarm data.

Optionally, the step that the data fusion processing is performed on the second alarm data of the plurality pieces of equipment to obtain the target alarm data includes at least one of the following:
performing target operation on a first part of data in the second alarm data of the plurality pieces of equipment to obtain virtual equipment alarm data;
filtering the second alarm data of the plurality pieces of equipment to obtain filtered alarm data;
performing repair processing on abnormal data in the second alarm data of the plurality pieces of equipment to obtain repaired alarm data; and
editing a second part of data in the second alarm data of the plurality pieces of equipment to obtain edited alarm data.

Specifically the target alarm data comprises at least one of the following: the virtual equipment alarm data, the filtered alarm data, the repaired alarm data, and the edited alarm data.

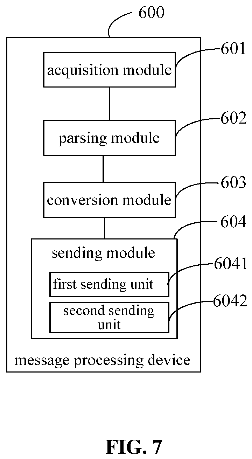

Optionally, as shown in FIG. 7, the sending module 604 includes at least one of the following:
a first sending unit 6041, used for acquiring alarm data satisfying the first preset condition from the second alarm data of the plurality pieces of equipment, generating the second alarm message corresponding to the first preset condition, and sending the second alarm message corresponding to the first preset condition to the first piece of target equipment, wherein the second alarm message corresponding to the first preset condition includes: the alarm data satisfying the first preset condition, the preset Kafka address information about the first piece of target equipment, and the preset Kafka topic information about the first piece of target equipment;
a second sending unit 6042, used for acquiring the alarm data satisfying the second preset condition from the second alarm data of the plurality pieces of equipment, generating the second alarm message corresponding to the second preset condition, and sending the second alarm message corresponding to the second preset condition to the second piece of target equipment, wherein the second alarm message corresponding to the second preset condition includes: the alarm data satisfying the second preset condition, the preset Kafka address information about the second piece of target equipment, and the preset Kafka topic information about the second piece of target equipment.

Optionally, the plurality pieces of equipment include the plurality pieces of equipment of different types, wherein the first alarm data of the plurality pieces of equipment of different types includes at least one of: an equipment identification, an alarm type, an alarm times, an alarm confirmation indication information, and time information. The present disclosure also provides a piece of electronic equipment, a readable storage medium, and a computer program product according to embodiments of the present disclosure.

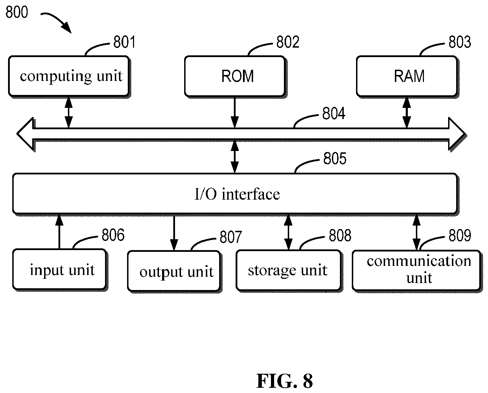

Figure 8 illustrates a schematic block diagram of an example piece of electronic equipment 800 that may be used to implement embodiments of the present disclosure. Pieces of electronic equipment are intended to represent various forms of digital computers, such as laptop computers, desktop computers, workstations, personal digital assistants, servers, blade servers, mainframe computers, and other suitable computers. Pieces of electronic equipment may also represent various forms of mobile equipment, such as personal digital assistants, cellular telephones, smart phones, wearable equipment, and other pieces of similar computing devices. The components illustrated herein, their connections and relationships, and their functions are merely exemplary and are not intended to limit the implementations of the disclosure described and/or claimed herein.

As shown in FIG. 8, the equipment 800 includes a computing unit 801 that may perform various appropriate actions and processes in accordance with a computer program stored in a read-only memory (ROM) 802 or a computer program loaded from a storage unit 808 into a random access memory (RAM) 803. In the RAM 803, various programs and data required for the operation of the equipment 800 can also be stored. The computing unit 801, the ROM 802, and the RAM 803 are connected to each other through bus 804. An input/output (I/O) interface 805 is also coupled to the bus 804. A number of components in the equipment 800 are connected to the I/O interface 805, including: an input unit 806, such as a keyboard, mouse, etc. The output unit 807 is, for example, various types of displays, speakers, etc. The storage unit 808 is, for example, a magnetic disk, an optical disk, etc. Further, the communication unit 809 is, for example, a network card, a modem, a wireless communication transceiver, etc. The communication unit 809 allows the equipment 800 to exchange information/data with other pieces of equipment over a computer network such as the Internet and/or various telecommunication networks.

The computing unit 801 may be a variety of general purpose and/or special purpose processing components with processing and computing capabilities. Some examples of the computing unit 801 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 801 performs various methods and processes described above, such as the message processing method. For example, in some embodiments, the message processing method may be implemented as the computer software program tangibly embodied on a machine-readable medium, such as the storage unit 808. In some embodiments, part or all of the computer program may be loaded and/or installed on the equipment 800 through the ROM 802 and/or the communication unit 809. One or more of the steps of the message processing method described above may be performed when the computer program is loaded into the RAM 803 and executed by the computing unit 801. Optionally, in other embodiments, the computing unit 801 may be configured to perform the message processing method in any other suitable manner (e. g. through firmware).

Various embodiments of the systems and techniques described herein above may be implemented in digital electronic circuitry, integrated circuit systems, field programmable gate arrays (FPGAs), application specific integrated circuits (ASICs), application specific standard products (ASSPs), systems on chip (SOCs), load programmable logic devices (CPLDs), computer hardware, firmware, software, and/or combinations thereof. These various embodiments may include: implemented in one or more computer programs, the one or more computer programs can be executed and/or interpreted on the programmable system including at least one programmable processor, which can be a dedicated or general purpose programmable processor, that can receive data and instructions from, and transmit data and instructions to, a storage system, at least one input device, and at least one output device.

Program code for implementing methods of the present disclosure may be written in any combination of one or more programming languages. Such program code can be provided to a processor or controller of a general purpose computer, special purpose computer, or other programmable data processing device, such that the program code when executed by the processor or controller causes the functions/acts specified in the flowchart and/or block diagram block or blocks to be performed. The program code may execute entirely on the machine, partly on the machine, as a stand-alone software package partly on the machine and partly on a remote machine or entirely on the remote machine or server.

In the context of this disclosure, a machine-readable medium can be a tangible medium that can include or store a program for use by or in connection with an instruction execution system, device, or equipment. The machine-readable medium may be a machine-readable signal medium or a machine-readable storage medium. The machine-readable medium may include, but is not limited to, an electronic, magnetic, optical, electromagnetic, infrared, or semiconductor system, device, or equipment, or any suitable combination of the preceding. More specific examples of a machine-readable storage medium would include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), optical storage equipment, magnetic storage equipment, or any suitable combination of the preceding.

To provide for interaction with a user, the systems and techniques described herein may be implemented on a computer having: a display device (e. g. a CRT (cathode ray tube) or LCD (liquid crystal display) monitor) for displaying information to a user; and a keyboard and a pointing device (e. g. a mouse or a trackball) through which a user can provide input to the computer. Other kinds of devices can also be used to provide interaction with the user; for example, the feedback provided to the user can be any form of sensory feedback (e. g. visual feedback, auditory feedback, or tactile feedback); the input from the user may be received in any form, including acoustic input, speech input, or touch input.

The systems and techniques described herein can be implemented in a computing system that includes a background component (e. g. as a data server), or that includes a middleware component (e. g. an application server), or that includes a front-end component (e. g. a user computer having a graphical user interface or a web browser through which a user can interact with an implementation of the systems and techniques described herein), or any combination of such background, middleware, or front-end components. The components of the system may be interconnected by any form or medium of digital data communication (e. g. a communication network). Examples of communication networks include: Local Area Networks (LANs), Wide Area Networks (WANs) and the Internet.

The computer system may include a client and a server. The client and the server are generally remote from each other and typically interact through a communication network. The relationship of client and server is generated by computer programs running on respective computers and having a client-server relationship to each other. It should be understood that various forms of flow, reordering, adding or deleting steps shown above may be used. For example, the steps described in this disclosure may be performed in parallel, may be performed sequentially, or may be performed in a different order, and are not limited herein as long as the desired results of the disclosed aspects are achieved.

The above specific embodiments are not to be construed as limiting the scope of the present disclosure. It will be apparent to those skilled in the art that various modifications, combinations, sub-combinations, and substitutions can be made depending on design requirements and other factors.

## Claims

1. A message processing method executed by a computer, comprising:
acquiring a first alarm message based on an Object Linking and Embedding (OLE)-Alarm and Events (AE) protocol, wherein the first alarm message comprises first alarm data of a plurality pieces of equipment;
parsing the first alarm message to obtain the first alarm data of the plurality pieces of equipment;
converting the first alarm data of the plurality pieces of equipment into second alarm data in a JSON format to obtain second alarm data of the plurality pieces of equipment; and
generating a second alarm message based on the second alarm data of the plurality pieces of equipment and sending the second alarm message to target equipment based on a Kafka protocol.

2. The method according to claim 1, wherein the first alarm message comprises M alarm messages, wherein M is a positive integer greater than one;
the second alarm message comprises N second alarm messages, wherein N is a positive integer less than M.

3. The method according to claim 1, wherein the generating a second alarm message based on the second alarm data of the plurality pieces of equipment comprises:
performing data fusion processing on the second alarm data of the plurality pieces of equipment to obtain target alarm data, and generating the second alarm message, wherein the second alarm message comprises the target alarm data.

4. The method according to claim 3, wherein the performing data fusion processing on the second alarm data of the plurality pieces of equipment to obtain target alarm data comprises at least one of the following:
performing target operation on a first part of data in the second alarm data of the plurality pieces of equipment to obtain virtual equipment alarm data;
filtering the second alarm data of the plurality pieces of equipment to obtain filtered alarm data;
performing repair processing on abnormal data in the second alarm data of the plurality pieces of equipment to obtain repaired alarm data; and
editing a second part of data in the second alarm data of the plurality pieces of equipment to obtain edited alarm data;
wherein the target alarm data comprises at least one of the following:
the virtual equipment alarm data, the filtered alarm data, the repaired alarm data, and the edited alarm data.

5. The method according to claim 1, wherein the generating a second alarm message based on the second alarm data of the plurality pieces of equipment and sending the second alarm message to the target equipment based on a Kafka protocol comprises at least one of the following:
acquiring alarm data satisfying a first preset condition from the second alarm data of the plurality pieces of equipment, generating the second alarm message corresponding to the first preset condition, and sending the second alarm message corresponding to the first preset condition to a first piece of target equipment, wherein the second alarm message corresponding to the first preset condition comprises: the alarm data satisfying the first preset condition, preset Kafka address information of the first piece of target equipment, and preset Kafka topic information of the first piece of target equipment;
acquiring the alarm data satisfying a second preset condition from the second alarm data of the plurality pieces of equipment, generating the second alarm message corresponding to the second preset condition, and sending the second alarm message corresponding to the second preset condition to a second piece of target equipment, wherein the second alarm message corresponding to the second preset condition comprises: the alarm data satisfying the second preset condition, preset Kafka address information of the second piece of target equipment, and preset Kafka topic information of the second piece of target equipment.

6. The method according to any one of claims 1-5, wherein the plurality pieces of equipment comprise the plurality pieces of equipment of different types, the first alarm data of the plurality pieces of equipment of different types comprises at least one of the following:
an equipment identification, an alarm type, an alarm times, an alarm confirmation indication information, and time information.

7. The method according to any one of claims 1-6, wherein
the plurality pieces of equipment are the plurality pieces of equipment to be monitored, each piece of equipment to be monitored is the equipment to be monitored having an OPC-AE protocol connection established with an OPC-AE server, and each piece of equipment to be monitored is a piece of Internet of Things (IoT) equipment in an intelligent building or the IoT equipment in an industrial site; and
the number of the pieces of target equipment is one or more, and the pieces of target equipment comprise at least one of an Internet of Things platform, third party equipment, an alarm platform.

8. A message processing device realized by a computer, comprising:
an acquisition module, configured to acquire a first alarm message based on an Object Linking and Embedding (OLE)-Alarm and Events (AE) protocol, wherein the first alarm message comprises first alarm data of a plurality pieces of equipment;
a parsing module, configured to parse the first alarm message to obtain the first alarm data of the plurality pieces of equipment;
a conversion module, configured to convert the first alarm data of the plurality pieces of equipment into second alarm data in a JSON format to obtain second alarm data of the plurality pieces of equipment; and
a sending module, configured to generate a second alarm message based on the second alarm data of the plurality pieces of equipment and sending the second alarm message to target equipment based on a Kafka protocol.

9. The message processing device according to claim 8, wherein the first alarm message comprises M alarm messages, and M is a positive integer greater than one;
the second alarm message comprises N second alarm messages, wherein N is a positive integer less than M.

10. The message processing device according to claim 8, wherein the sending module is further configured to:
perform data fusion processing on the second alarm data of the plurality pieces of equipment to obtain target alarm data, and generate the second alarm message, wherein the second alarm message comprises the target alarm data.

11. The message processing device according to claim 10, wherein the performing data fusion processing on the second alarm data of the plurality pieces of equipment to obtain target alarm data comprises at least one of the following:
performing target operation on a first part of data in the second alarm data of the plurality pieces of equipment to obtain virtual equipment alarm data;
filtering the second alarm data of the plurality pieces of equipment to obtain filtered alarm data;
performing repair processing on abnormal data in the second alarm data of the plurality pieces of equipment to obtain repaired alarm data; and
editing a second part of data in the second alarm data of the plurality pieces of equipment to obtain edited alarm data;
wherein the target alarm data comprises at least one of the following:
the virtual equipment alarm data, the filtered alarm data, the repaired alarm data, and the edited alarm data.

12. The message processing device according to claim 8, wherein the sending module comprises at least one of:
a first sending unit, configured to acquire alarm data satisfying a first preset condition from the second alarm data of the plurality pieces of equipment, generate the second alarm message corresponding to the first preset condition, and send the second alarm message corresponding to the first preset condition to a first piece of target equipment, wherein the second alarm message corresponding to the first preset condition comprises: the alarm data satisfying the first preset condition, preset Kafka address information of the first piece of target equipment, and preset Kafka topic information of the first piece of target equipment;
a second sending unit, configured to acquire the alarm data satisfying a second preset condition from the second alarm data of the plurality pieces of equipment, generate the second alarm message corresponding to the second preset condition, and send the second alarm message corresponding to the second preset condition to a second piece of target equipment, wherein the second alarm message corresponding to the second preset condition comprises: the alarm data satisfying the second preset condition, preset Kafka address information of the second piece of target equipment, and preset Kafka topic information of the second piece of target equipment.

13. The message processing device according to any one of claims 8-12, wherein the plurality pieces of equipment comprise the plurality pieces of equipment of different types, the first alarm data of the plurality pieces of equipment of different types comprises at least one of the following:
an equipment identification, an alarm type, an alarm times, an alarm confirmation indication information, and time information.

14. A computer-readable storage medium storing therein a computer instruction, wherein the computer instruction is executed by a computer so as to implement the message processing method according to any one of claims 1 to 7.

15. A computer program product, wherein the computer program product is operated on an electronic device so as to implement the message processing method according to any one of claims 1 to 7.
